# EUROPEAN PATENT APPLICATION

(11) **EP 4 819 622 A1**
(43) Date of publication of application: **07.10.2026**
(21) Application number: 24896135.1
(22) Date of filing: 29.10.2024
(51) Int. Cl.: H04N 21/472

(54) **INTERACTION METHOD AND APPARATUS, DEVICE, AND STORAGE MEDIUM**

(30) Priority: 30.11.2023 CN 202311636390
(71) Applicant: BEIJING YOUZHUJU NETWORK TECHNOLOGY CO. LTD., Beijing 101299 (CN)
(72) Inventor: FU, Qiang, Beijing 100028 (CN); HU, Jiali, Beijing 100028 (CN)
(74) Representative: Grünecker Patent- und Rechtsanwälte PartG mbB
(86) International application number: PCT/CN2024/128143
(87) International publication number: WO 2025/113044

(57) **Abstract**

The embodiment of the disclosure provides a method, apparatus, device and storage medium for interaction. The method includes: presenting a first historical live streaming video segment corresponding to a first object in response to a first live streaming playback viewing request for the first object, wherein a presentation area of the first historical live streaming video segment comprises object attribute information of a plurality of objects, and the plurality of objects comprise the first object and at least one first candidate object corresponding to the first object; and presenting a target page corresponding to object attribute information of a target object in response to a trigger operation on the object attribute information of the target object, wherein the target object is the first object or any first candidate object of the plurality of objects. Therefore, when a user watches live streaming playback content of a certain object, the object attribute information of more relevant objects can be provided to the user, so that the user can conveniently switch to view more objects or interact with more objects.

## Description

This application claims the benefit of Chinese Patent Application No. 202311636390.7, filed on November 30, 2023, entitled "Method, Apparatus, Device, and Storage Medium for Interaction," the entire content of which is incorporated herein by reference.

### FIELD

Example embodiments of the present disclosure generally relate to the field of computers, and in particular, to methods, apparatuses, devices, and computer-readable storage media for interaction.

### BACKGROUND

Currently, more and more platforms (e.g., applications, websites, etc.) are designed to provide various services to users. For example, a user may post, browse, and view various types of multimedia content (e.g., videos) in a platform. The user may also watch the live streaming in the platform, for example. Live streaming content may comprise content related to at least one object (e.g., explanation content for at least one object).

### SUMMARY

In a first aspect of the present disclosure, a method for interaction is provided. The method comprises: presenting a first historical live streaming video segment corresponding to a first object in response to a first live streaming playback viewing request for the first object, wherein a presentation area of the first historical live streaming video segment comprises object attribute information of a plurality of objects, and the plurality of objects comprise the first object and at least one first candidate object corresponding to the first object; and presenting a target page corresponding to object attribute information of a target object in response to a trigger operation on the object attribute information of the target object, wherein the target object is the first object or any first candidate object of the plurality of objects.

In a second aspect of the present disclosure, an apparatus for interaction is provided. The apparatus comprises: a historical segment presentation module configured to present a first historical live streaming video segment corresponding to a first object in response to a first live streaming playback viewing request for the first object, wherein a presentation area of the first historical live streaming video segment comprises object attribute information of a plurality of objects, and the plurality of objects comprise the first object and at least one first candidate object corresponding to the first object; and a target page presentation module configured to present a target page corresponding to the object attribute information of the target object in response to a trigger operation on the object attribute information of the target object, wherein the target object is the first object or any first candidate object of the plurality of objects.

In a third aspect of the present disclosure, an electronic device is provided. The apparatus comprises at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, and the computer program is executable by a processor to implement the method of the first aspect.

In a fifth aspect of the present disclosure, a computer program product is provided, comprising computer program instructions that, when executed by a processor, implement the image processing method as described above.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numerals refer to the same or similar elements, in which:
FIG. 1 illustrates a schematic diagram of an example environment in which embodiments of the present disclosure can be implemented;
FIGS. 2A to 2D illustrate schematic diagrams of example pages according to some embodiments of the present disclosure;
FIG. 3 illustrates a flowchart of a process for interaction according to some embodiments of the present disclosure;
FIG. 4 illustrates a block diagram of an apparatus for interaction according to some embodiments of the present disclosure; and
FIG. 5 illustrates a block diagram of an electronic device capable of implementing one or more embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for example purposes only and are not intended to limit the scope of the present disclosure.

In the description of embodiments of the present disclosure, the terms "comprise" or "include" and its similar wording should be understood to be open-ended, i.e. "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be comprised below.

Herein, unless explicitly stated, performing a step "in response to A" does not mean that the step is performed immediately after "A", but may comprise one or more intermediate steps.

It may be understood that the data involved in the technical solution (including but not limited to the data itself, the obtaining or use of the data) should follow the requirements of the corresponding laws and regulations and related specifications.

It may be understood that, before the technical solutions disclosed in the embodiments of the present disclosure are used, the user should be informed of the type, the usage scope, the usage scenario, etc. of personal information related to the present disclosure in an appropriate manner according to the relevant laws and regulations, and the authorization of the user is obtained.

For example, prompt information is sent to the user to explicitly prompt the user that the requested operation will need to obtain and use personal information of the user in response to receiving an active request from the user, so that the user can autonomously select whether to provide the personal information to software or hardware such as an electronic device, an application, a server or a storage medium executing the operation of the technical solution of the present disclosure according to the prompt information.

As an optional but non-limiting implementation, in response to receiving an active request of the user, the manner of sending prompt information to the user may be, for example, a pop-up window, and prompt information may be presented in a text manner in the pop-up window. In addition, the pop-up window may further carry a selection control for the user to select "agree" or "disagree" to provide personal information to the electronic device.

It may be understood that the above processes of notifying and obtaining user authorization are merely illustrative, and do not constitute a limitation on implementations of the present disclosure, and other ways satisfying the relevant laws and regulations may also be applied to implementations of the present disclosure.

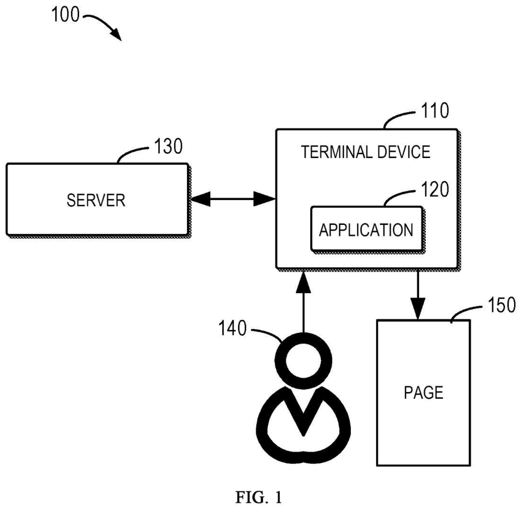

FIG. 1 illustrates a schematic diagram of an example environment 100 in which embodiments of the present disclosure can be implemented. As shown in FIG. 1, the example environment 100 may comprise a terminal device 110.

In this example environment 100, an application 120 is installed in the terminal device 110. The user 140 may interact with the application 120 via the terminal device 110 and/or an attachment device of the terminal device 110. The application 120 may be a social type application, a content sharing type application, a shopping type application, or any other suitable application.

In the environment 100 of FIG. 1, the terminal device 110 may present a page 150 of the application 120 if the application 120 is active. The page 150 may comprise various types of pages that the application 120 can provide, such as a content presentation page, a content creation page, a content posting page, a message page, a personal homepage, etc. The application 120 may provide a content viewing function to view various types of content posted in the application 120. Via the corresponding page, the application 120 may provide the user 140 with information related to the particular object. Various types of operation controls may also be provided in each page to be selected and operated by a user. In some embodiments, some pages of the application 120 may also provide a live streaming content viewing function.

In some embodiments, the terminal device 110 communicates with the server 130 to enable provisioning of services for the application 120. The terminal device 110 may be any type of mobile terminal, fixed terminal, or portable terminal, comprising a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, accessories and peripherals comprising these devices, or any combination thereof. In some embodiments, the terminal device 110 can also support any type of user-specific interface (such as a "wearable" circuit, etc.). The server 130 may be various types of computing systems/servers capable of providing computing power, including, but not limited to, mainframes, edge computing nodes, computing devices in a cloud environment, and the like.

It should be understood that the structures and functions of the various elements in the environment 100 are described for example purposes only and do not imply any limitation to the scope of the present disclosure.

As mentioned briefly above, a user may post, browse, and view various types of multimedia content in a platform. For example, the user may also watch live streaming or the playback of the live streaming content in the platform. Conventionally, in a case that a user browses only a part of the live streaming content for a certain object, the terminal device may present, in a page of the application, a historical live streaming video segment for the certain object in the live streaming content. The terminal device may also present an interface element associated with the object. The terminal device may present detailed content of the object in response to detecting a trigger operation on the interface element. However, the terminal device may only present an element corresponding to the object associated with the content in the page, and the user cannot easily and quickly switch to view content corresponding to other objects in the live streaming content in this page. This brings the limitation of interaction and affects the user's interaction experience.

According to an embodiment of the present disclosure, an improved solution for interaction is provided. In this solution, a first historical live streaming video segment corresponding to a first object is presented in response to a first live streaming playback viewing request for the first object, wherein a presentation area of the first historical live streaming video segment comprises object attribute information of a plurality of objects, and the plurality of objects comprise the first object and at least one first candidate object corresponding to the first object. A target page corresponding to the object attribute information of a target object is presented in response to a trigger operation on the object attribute information of the target object, wherein the target object is a first object or any first candidate object in the plurality of objects. In this way, when the user watches the live streaming playback content of a certain object, the object attribute information of more relevant objects can be provided to the user at the same time, so that the user can conveniently switch to view more objects or interact with more objects. This may provide more content viewing paths for the user and improve the user interaction experience.

Example embodiments of the present disclosure are described below with reference to the accompanying drawings.

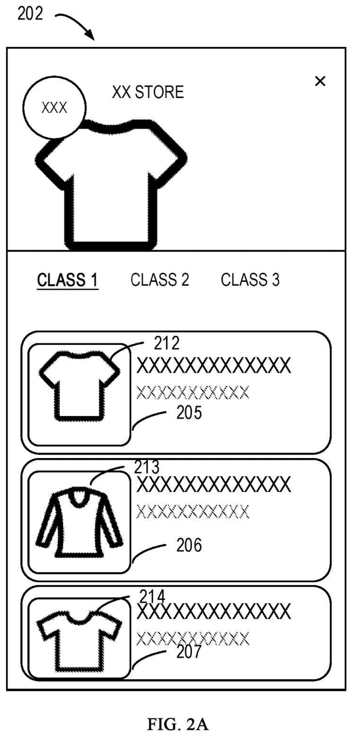

For ease of understanding, some examples are first described in connection with the example pages of FIGS. 2A to 2D. It should be understood that the pages shown in the drawings are merely examples, and various page designs may actually exist. Individual graphical elements in a page may have different arrangements and different visual representations, one or more of which may be omitted or replaced, and one or more other elements may also be exist. Embodiments of the present disclosure are not limited in this respect. Example embodiments are described below with reference to the environment of FIG. 1. The pages shown in FIG. 2A to FIG. 2D may be presented by the terminal device 110. It should be noted that the operations performed by the terminal device 110 described above may be performed specifically by means of a relevant application installed on the terminal device 110. In some embodiments, certain operations may need to be completed with support of a server or other device.

During operation of the application 120, the user 140 may initiate a live streaming playback viewing request for a particular object. The terminal device 110 presents a first historical live streaming video segment corresponding to the first object in response to the first live streaming playback viewing request for the first object. For example, the first historical live streaming video segment may be presented on a particular page, which may be referred to as a live streaming playback page. In some embodiments, the first historical live streaming video segment is obtained from historical live streaming content of the live stream interface, and comprises explanation content related to the first object in the live streaming content. In some embodiments, the first historical live streaming video segment may comprise explanation content for the first object throughout the live streaming content.

Herein, both the first object and the object to be mentioned hereinafter refer to an object for which an introduction, description or other related information is given in a page of the application. The object may refer to an entity object, a virtual object, and the like, including but not limited to an entity product, a virtual product, service, and the like.

In practical applications, various types of pages may be defined for presenting historical live streaming video segments of a certain object. An access entry of the live streaming playback page may take many forms depending on the specific application design.

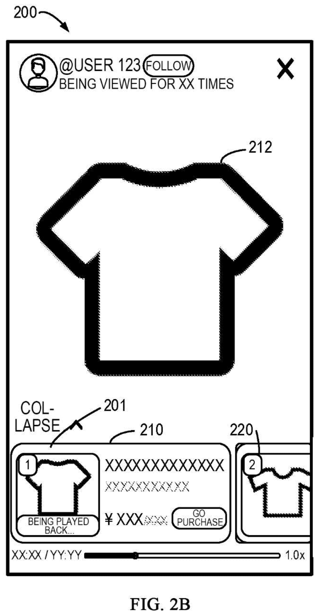

In some embodiments, the terminal device 110 may further present a live streaming playback viewing entry associated with the first object on a content presentation page (e.g., a homepage or dynamic presentation page of an entity (e.g., a user, a store, an organization, and the like) that provides the first object, an object introduction page that promotes/introduces the first object and comprises at least one object) associated with the first object and comprising at least one object. The terminal device 110 may, in response to detecting a trigger operation for the live streaming playback viewing entry, detect a first live streaming playback request for the first object and present a first historical live streaming video segment corresponding to the first object. FIG. 2A illustrates an example page 202 for initiating a live streaming playback viewing request for a particular object, the page corresponding to a store homepage. A live streaming playback viewing entry 205 of an object 212 in the store, a live streaming playback viewing entry 206 of an object 213, and a live streaming playback viewing entry 207 of an object 214, and the like are presented in the page. In response to detecting the trigger operation of the live streaming playback viewing entry 205 of the object 212, the first historical live streaming video segment corresponding to the object 212 is presented, as shown in FIG. 2B.

In some embodiments, the terminal device 110 may present at least one viewing entry corresponding to the at least one object in the live streaming page of a live stream interface. For example, the terminal device 110 may present the live streaming playback page in response to detecting a trigger operation on the live streaming playback viewing entry corresponding to the first object in the at least one viewing entry. That is, the playback page of the historical live streaming video segment of a certain object (for example, the first object) may be accessed in an object list interface of the live stream interface.

In some embodiments, the terminal device 110 may further present, in the details view page of the first object, the live streaming playback viewing entry corresponding to the first historical live streaming video segment. The terminal device 110 may present the live streaming playback page in response to detecting a trigger operation for the live streaming playback viewing entry in a details view page of the first object. For example, the application 120 may provide a details page about a particular object, in which a live streaming playback viewing entry for the object is provided.

In some embodiments, the terminal device 110 may further present at least one live stream interface in response to receiving a text input by the user and associated with the first object on a search page. The live streaming content of the at least one live stream interface may comprise content related to the first object. The terminal device 110 may present content related to the first object in each live stream interface in the search page. It may be understood that, in this case, the terminal device 110 may, for example, present the live streaming playback page in response to a selection operation on any live stream interface (e.g., the first live stream interface) in the at least one live stream interface, and present the first historical live streaming video segment of the first live stream interface in the live streaming playback page, that is, the content related to the first object is extracted from the live streaming content of the first live stream interface and the content related to the first object in the live streaming content of the first live stream interface is comprised.

In an embodiment of the present disclosure, a presentation area of the first historical live streaming video segment comprises object attribute information of a plurality of objects. The plurality of objects comprises a first object and at least one first candidate object associated with the first object. Taking the object as a product as an example, the object attribute information of the object may comprise, for example, a product name, pictures, price, description, and the like. The object attribute information of the plurality of objects may be presented on the first historical live streaming video segment in a superimposed manner, for example. A user trigger operation (e.g., clicking, double-clicking, sliding) and the like on the object attribute information of each object in the plurality of objects may trigger a corresponding target page which presents the object attribute information of the object. For example, the target page corresponding to the object attribute information of the target object is presented in response to a trigger operation on the object attribute information of the target object in the plurality of objects. The target object here may be a first object or any candidate object of the plurality of objects.

In some embodiments, the terminal device 110 may present, on the live streaming playback page, the object attribute information respectively corresponding to the plurality of objects in a superimposed manner during the playing of the first historical live streaming video segment. Since not only the object attribute information of the current first object is provided in the live streaming playback page, but also the object attribute information of more related objects is provided, the user may freely select whether other objects are also interested or not as needed and perform a corresponding interaction through the object attribute information. In this way, when browsing the first historical live streaming video segment of the first object, the user may further learn more content by means of the superimposed object attribute information of the plurality of objects.

In some embodiments, a presentation area of the first historical live streaming video segment comprises a plurality of card components respectively corresponding to the plurality of objects. The plurality of card components present the object attribute information of the plurality of objects, respectively. For example, the plurality of card components respectively corresponding to the plurality of objects may be presented on the first historical live streaming video segment in a superimposed manner. It may be understood that the terminal device 110 may also present the object attribute information corresponding to the plurality of objects in any suitable manner, not limited to the card component. The present disclosure does not limit the presentation manner of the object attribute information.

As shown in FIG. 2B, the terminal device 110 may present the first historical live streaming video segment in a page 200, and the first historical live streaming video segment is extracted from the live streaming content of the live stream interface and comprises content related to the first object 212 (e.g., clothes) in the live streaming content. In FIG. 2B, the object attribute information is presented in the card component is taken as an example. The terminal device 110 may present a plurality of card components respectively corresponding to the plurality of objects on the page 200 in a superimposed manner, and the plurality of objects comprise the first object and at least one first candidate object corresponding to the first object. That is, the plurality of card components comprise a first card component (e.g., a card component 210) corresponding to the first object and at least one candidate card component corresponding to the at least one first candidate object (e.g., card components 220, 222, and the like corresponding to other clothing commodities).

In addition to presenting the object attribute information of the plurality of objects, at least one card component of the plurality of card components may further comprise a details page entry of the corresponding object, an interaction operation control for the corresponding object, and the like. That is, the at least one card component may comprise a details page entry of the corresponding object and/or an interaction operation control for the corresponding object. The trigger operation on the details page entry and the interaction operation control may trigger different target pages of a presented object.

The terminal device 110 may, for example, switch to a details page for presenting a certain object in response to detecting a trigger operation on a details page entry of the corresponding object. The terminal device 110 may, for example, perform an interaction operation for a certain object in response to a trigger operation on an interaction operation control for the corresponding object. For example, in an e-commerce scenario, the provided interaction operation control may comprise one or more of a shopping cart adding operation and a direct purchase operation. In other application scenarios, other interaction operations may be designed depending on the type of the object and the scenario requirement.

Considering that the user may be interested in the first object and the similar object when viewing the first historical live streaming video segment of the first object, in some embodiments, when the object attribute information of the plurality of objects presented is superimposed, the at least one first candidate object may comprise an object of the same object type as the first object. For example, in a product scenario, products may be divided into different object types according to product categories.

In some embodiments, the at least one first candidate object may further comprise an object whose degree of association with the first object satisfies a predetermined association threshold. The determination of the degree of association may be based on collocation purchase with the first object, or many users are willing to purchase an object B while purchasing an object A. It may be understood that, if most users purchase the first object and the second object at the same time, or most users purchasing the first object will also purchase the second object, it may be determined that the degree of association between the second object and the first object satisfies the predetermined association threshold.

In some embodiments, alternatively or in addition, the at least one first candidate object may further comprise an object belonging to the same managed object set as the first object. The same managed object set refers to an object set divided by specific requirements. In some embodiments, products in the same store may be considered to belong to the same managed object set. In some examples, the products in a shelf of the same live stream interface may be considered to belong to the same managed object set.

In some embodiments, the at least one first candidate object may further comprise an object having a second historical live streaming video segment, the object being explained in the second historical live streaming video segment. Alternatively, the at least one first candidate object may further comprise an object whose content quality of the second historical live streaming video segment satisfies the predetermined quality threshold. The predetermined quality threshold here may be predetermined by a related user (e.g., a streamer of a live stream interface, a console worker of a live streaming application and the like), or automatically determined based on historical data and the like. In some embodiments, among all objects belonging to the same object type as the first object, the degree of association satisfying the predetermined association threshold, and/or belonging to the same managed object set, the object with the historical live streaming video segment or the object with the higher quality of the historical live streaming video segment may be preferably used as the first candidate object. As such, candidate objects with high quality live streaming playback may be presented in association with the first object, since the user may be more interested in such candidate objects.

Based on the example embodiments discussed above, the at least one first candidate object selected to be presented with the first object may satisfy at least one of the following conditions: belonging to the same object type as the first object, with a degree of association with the first object satisfying a predetermined association threshold, or belonging to a same managed object set as the first object. In some embodiments, the at least one first candidate object further satisfies at least one of the following conditions: corresponding to a second historical live streaming video segment, and/or a content quality of the second historical live streaming video segment is higher (e.g., satisfying the predetermined quality threshold).

In some embodiments, in a case that multiple candidate objects are comprised, the number of card components that are presented on the live streaming playback page in a superimposed manner may be a predetermined number. Since the number of card components that can be presented is limited, the terminal device 110 may also determine scores corresponding to the plurality of candidate objects associated with the first object. The terminal device 110 may determine scores respectively corresponding to the plurality of candidate objects, for example, based on the quality of the historical live streaming video segment corresponding to each candidate object in the plurality of candidate objects. The terminal device 110 may, based on a predetermined number, determine a group of candidate objects with a higher score from the plurality of candidate objects as the object to present the card component. At this time, the determined candidate object is determined as the at least one first candidate object. The terminal device 110 may further present, in the live streaming playback page, a plurality of card components respectively corresponding to the first object and the determined at least one first candidate object. For example, if the terminal device 110 may only present 10 card components on the live streaming playback page, the terminal device 110 may determine that only the card component corresponding to the first object and the card components corresponding to the 9 candidate objects may be presented. If it is determined that the number of objects associated with the first object exceeds 9, the terminal device 110 may further determine scores respectively corresponding to the objects, and determine 9 objects with the highest score as the candidate objects. The terminal device 110 may present, in the live streaming playback page, the card component corresponding to the first object and the card component corresponding to the determined 9 candidate objects with the highest score.

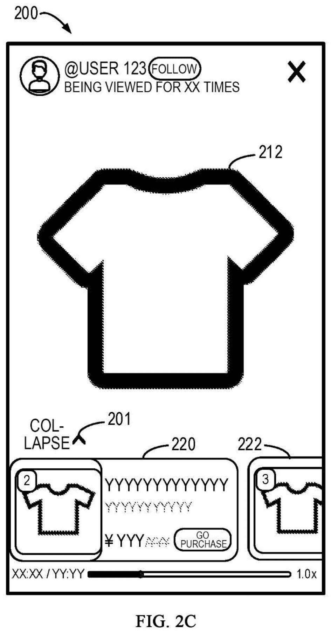

In FIG. 2B, for ease of understanding, a plurality of card components 210, 220, 222 are shown, and it is possible that more card components not shown, but depending on the limitation of a presentation area of the page, only part of the plurality of card components may be presented, while the remainder is hidden. In some embodiments, at least one card component of the plurality of card components is switched to at least one further card component in the presentation area of the first historical live streaming video segment in response to detecting a swiping operation of the plurality of card components in a first direction. That is, the terminal device 110 may present the hidden card components in response to receiving the swiping operation (e.g., a leftward swiping operation, a rightward swiping operation, and the like). For example, from the page 200 shown in FIG. 2B. The terminal device 110 may switch to present a further card component in response to receiving the swiping operation for the plurality of card components in the page 200, as shown in FIG. 2C. In this way, the card component 210 is no longer presented in FIG. 2C as compared to FIG. 2B. In this case, the terminal device 110 may, for example, present the card component 220 and other card components corresponding to the candidate objects.

In some embodiments, in the presentation area of the first historical live streaming video segment, the object attribute information or a card component of the first object is presented in a more prominent position than the object attribute information or the card component of the at least one first candidate object. That is, the terminal device 110 may preferentially present the object attribute information or the card component of the first object in the live streaming playback page. For example, as shown in FIG. 2B, the terminal device 110 may present the card component 210 of the first object as a first card component of the plurality of card components, that is, the card component closest to the left side. Of course, the presentation position of the card component corresponding to the first object depends on the arrangement manner of a plurality of card component sets. In the example of FIG. 2B, when a plurality of card components are arranged in a left-to-right manner, the card component 210 corresponding to the first object may be presented in a leftmost position. In other examples, when the plurality of card components are arranged in a top-to-bottom manner, the card component 210 corresponding to the first object may be presented in an uppermost position.

In some embodiments, when the plurality of candidate objects are comprised, the terminal device 110 may further present the object attribute information or the card components of the plurality of candidate objects based on the sorting of the indicator values of respective predetermined indicators of the plurality of candidate objects. For example, taking both of the first object and the candidate object being products as an example, the terminal device 110 may sort the at least one candidate card component corresponding to the at least one first candidate object based on respective sales volume of the at least one first candidate object. In the live streaming playback page, the terminal device 110 may present the first card component and the at least one candidate card component in the live streaming playback page based on the sorting of the at least one candidate card component. Therefore, the object attribute information or the candidate card component of the candidate object with a higher indicator value of the predetermined indicator may be preferentially presented, facilitating to improve the interaction experience of the user.

In some embodiments, if the user stays to view the live streaming playback page after the live streaming playback page is presented in response to the first live streaming playback viewing request, the plurality of card components presented on the live streaming playback page do not change. In some embodiments, if the user revisits the live streaming playback page again after exiting the live streaming playback page, the plurality of card components presented in the live streaming playback page may also be updated. In some embodiments, if the superimposed presentation of the plurality of card components comprising the first card component and the at least one candidate card component is based on the first live streaming playback viewing request for the live streaming playback page, the terminal device 110 may further present the plurality of card components respectively corresponding to the plurality of objects on the live streaming playback page in a superimposed manner, in response to a second live streaming playback viewing request for the live streaming playback page, the plurality of objects here comprising the first object and the at least one second candidate object corresponding to the first object. That is, the terminal device 110 may present in a superimposed manner, on the live streaming playback page, at least partially different object attribute information of a plurality of objects based on different live streaming playback viewing requests. The different live streaming playback viewing requests here may be, for example, live streaming playback viewing requests triggered by the same user at different times.

In some embodiments, similar to a selection standard of the first candidate object, the at least one second candidate object may comprise an object satisfying at least one of the following conditions: belonging to the same object type as the first object, with a degree of association with the first object satisfying a predetermined association threshold, or belonging to the same management object set as the first object. In some embodiments, the at least one second candidate object further satisfies corresponding to a third historical live streaming video segment and/or the content quality of the third historical live streaming video segment satisfies a predetermined quality threshold.

In some embodiments, the at least one first candidate object provided in response to the first live streaming playback viewing request and the at least one first candidate object provided in response to the second live streaming playback viewing request may comprise at least partially different objects, even though some objects in both may be the same. Certainly, depending on the specific situation, in some embodiments, if no more objects associated with the first object appear, when the user accesses the live streaming playback page corresponding to the first object multiple times, the plurality of card components in the live streaming playback page may remain unchanged, or the arrangement order is changed, but the involved objects are unchanged.

In some embodiments, if the live streaming playback page is presented to different users, the plurality of card components presented in the live streaming playback page may be the same or different. For example, the user A and the user B may trigger different live streaming playback viewing requests on the terminal device A and the terminal device B. The terminal device A presents, in response to a live streaming playback viewing request of a user A, a live streaming playback page for presenting the first historical live streaming video segment, and present object attribute information (e.g., a plurality of card components) of the plurality of objects in the live streaming playback page in a superimposed manner. The plurality of objects here comprise the first object and at least one first candidate object. The terminal device B presents, in response to the live streaming playback viewing request of the user B, the first historical live streaming video segment, and presents a plurality of card components respectively corresponding to the plurality of objects on the first historical live streaming video segment in a superimposed manner.

In some embodiments, the terminal device 110 may further present, in the live streaming playback page, a collapse control for the object attribute information of the plurality of objects. The terminal device 110 may, in response to detecting the trigger operation on the collapse control, collapse the presentation of the object attribute information of the plurality of objects, and display an expand control of the object attribute information of the plurality of objects in the live streaming playback page. The expand control here may be configured, for example, to cause the object attribute information of the plurality of objects to be presented in the live streaming playback page in an expanded manner.

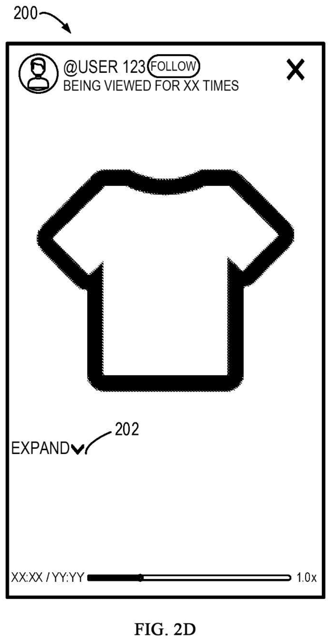

For example, the terminal device 110 may present the collapse control 201 in the page 200 shown in FIG. 2B and FIG. 2C. The terminal device 110 may, in response to detecting a trigger operation on the collapse control 201, collapse the plurality of card components (e.g., at least comprising the card components 210, 220, 222, etc.), and the terminal device 110 may, for example, switch to present the page 200 shown in FIG. 2D. As shown in FIG. 2D, the terminal device 110 may present an expand control 202 in the page 200. For example, the terminal device 110 may switch back to the page 200 shown in FIG. 2B in response to detecting the trigger operation on the expand control 202, that is, the terminal device 110 may switch back to present the plurality of card components 210, 220, 222, and the like. In this way, the user may determine whether to expand or collapse the plurality of card components that are presented in a superimposed manner according to the viewing requirements for the live streaming playback page or the first historical live streaming video segment.

In summary, according to the embodiments of the present disclosure, when the user watches the live streaming playback content of a certain object, the object attribute information of more relevant objects can be provided to the user, so that the user can conveniently switch to view more objects or interact with more objects.

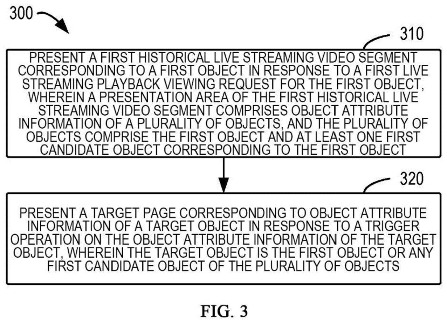

FIG. 3 illustrates a flowchart of a process 300 for interaction according to some embodiments of the present disclosure. The process 300 may be implemented at terminal device 110. The process 300 is described below with reference to FIG. 1.

At block 310, the terminal device 110 presents a first historical live streaming video segment corresponding to the first object in response to a first live streaming playback viewing request for the first object. A presentation area of the first historical live streaming video segment comprises object attribute information of a plurality of objects, and the plurality of objects comprise the first object and at least one first candidate object corresponding to the first object.

At block 320, a target page corresponding to the object attribute information of the target object is presented in response to the trigger operation on the object attribute information of the target object, wherein the target object is the first object or any first candidate object of the plurality of objects.

In some embodiments, the at least one first candidate object satisfies at least one of the following conditions: belonging to a same object type as the first object, with a degree of association with the first object satisfying a predetermined association threshold, or belonging to a same managed object set as the first object. In some embodiments, the at least one first candidate object further satisfies at least one of the following conditions: corresponding to a second historical live streaming video segment, and/or a content quality of the second historical live streaming video segment satisfying a predetermined quality threshold.

In some embodiments, a presentation area of the first historical live streaming video segment further comprises at least one of the following: a details page entry for each of the plurality of objects, or an interaction operation control for each of the plurality of objects.

In some embodiments, a presentation area of the first historical live streaming video segment comprises a plurality of card components respectively corresponding to the plurality of objects, the plurality of card components respectively presenting the object attribute information of the plurality of objects; and/or in the presentation area of the first historical live streaming video segment, the object attribute information or a card component of the first object is presented in a more promient position than the object attribute information or the card component of the at least one first candidate object; and/or the at least one first candidate object comprises a plurality of candidate objects, and the object attribute information or the card component of the plurality of candidate objects are ranked based on the indicator values of respective predetermined indicators of the plurality of candidate objects.

In some embodiments, the process 300 further comprises switching at least one card component of the plurality of card components to at least one further card component in the presentation area of the first historical live streaming video segment in response to detecting a swiping operation of the plurality of card components in the first direction.

In some embodiments, the process 300 further comprises: presenting the first historical live streaming video segment corresponding to the first object in response to a second live streaming playback viewing request for the first object, wherein a presentation area of the first historical live streaming video segment comprises object attribute information of the plurality of objects, and the plurality of objects comprise the first object and at least one second candidate object corresponding to the first object.

In some embodiments, a presentation area of the first historical live streaming video segment comprises a collapse control for the object attribute information of the plurality of objects, and the process 300 further comprises: collapsing a presentation of object attribute information of the plurality of objects and presenting an expand control for the object attribute information of the plurality of objects in response to detecting a trigger operation on the collapse control, wherein the expand control is configured to cause the object attribute information of the plurality of objects to be expanded for presenting.

In some embodiments, the first historical live streaming video segment is extracted from historical live content of the live stream interface, and the first historical live streaming video segment comprises explanation content related to the first object in the historical live streaming content.

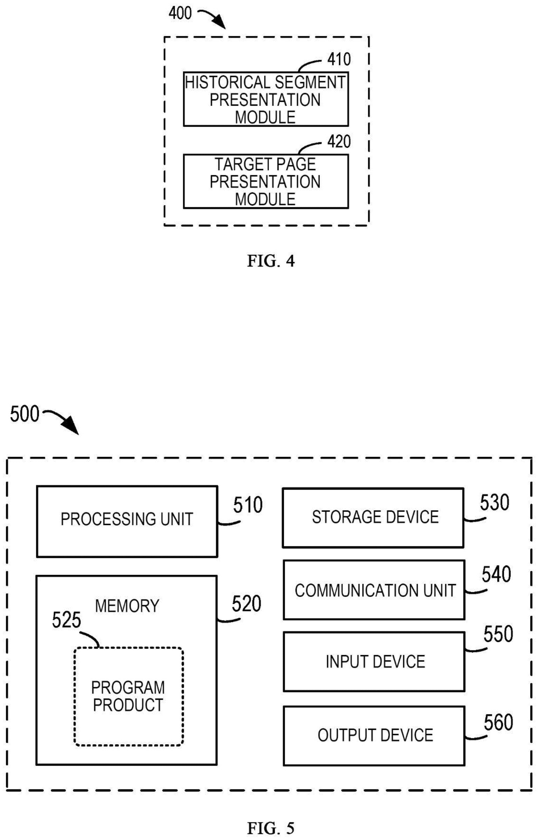

Embodiments of the present disclosure also provide a corresponding apparatus for implementing the above method or process. FIG. 4 illustrates a schematic structural block diagram of an apparatus 400 for interaction according to some embodiments of the present disclosure. The apparatus 400 may be implemented or comprised in the terminal device 110. The various modules/components in the apparatus 400 may be implemented by hardware, software, firmware, or any combination thereof.

As shown in FIG. 4, the apparatus 400 comprises a historical segment presentation module 410 configured to present a first historical live streaming video segment corresponding to a first object in response to a first live streaming playback viewing request for the first object, wherein a presentation area of the first historical live streaming video segment comprises object attribute information of a plurality of objects, and the plurality of objects comprise the first object and at least one first candidate object corresponding to the first object. The apparatus 400 further comprises a target page presentation module 420 configured to present a target page corresponding to the object attribute information of the target object in response to a trigger operation on the object attribute information of the target object, wherein the target object is a first object or any first candidate object of the plurality of objects.

In some embodiments, the at least one first candidate object satisfies at least one of the following conditions: belonging to a same object type as the first object, with a degree of association with the first object satisfying a predetermined association threshold, or belonging to a same management object set as the first object. In some embodiments, the at least one first candidate object further satisfies at least one of the following conditions: corresponding to a second historical live streaming video segment, and/or a content quality of the second historical live streaming video segment satisfying a predetermined quality threshold.

In some embodiments, a presentation area of the first historical live streaming video segment further comprises at least one of: a details page entry for each of the plurality of objects, or an interaction operation control for each of the plurality of objects.

In some embodiments, the presentation area of the first historical live streaming video segment comprises a plurality of card components respectively corresponding to the plurality of objects, the plurality of card components respectively presenting object attribute information of the plurality of objects; and/or in the presentation area of the first historical live streaming video segment, the object attribute information or a card component of the first object is presented in a more prominent position than the object attribute information or the card component of the at least one first candidate object; and/or the at least one first candidate object comprises a plurality of candidate objects, and the object attribute information or the card components of the plurality of candidate objects are ranked based on indicator values of respective predetermined indicators of the plurality of candidate objects.

In some embodiments, the apparatus 400 further comprises: a card component switching module, configured to switch at least one card component of the plurality of card components to at least one further card component in the presentation area of the first historical live streaming video segment in response to detecting a swiping operation on the plurality of card components in a first direction.

In some embodiments, the apparatus 400 further comprises: a segment presentation module, configured to present the first historical live streaming video segment corresponding to the first object in response to a second live streaming playback viewing request for the first object, wherein a presentation area of the first historical live streaming video segment comprises object attribute information of the plurality of objects, and the plurality of objects comprise the first object and at least one second candidate object corresponding to the first object.

In some embodiments, a presentation area of the first historical live streaming video segment comprises a collapse control for the object attribute information of the plurality of objects, and the apparatus 400 further comprises: a presenting and collapsing module, configured to collapse a presentation of the object attribute information of the plurality of objects and present an expand control for the object attribute information of the plurality of objects in response to detecting a trigger operation on the collapse control, wherein the expand control is configured to cause the object attribute information of the plurality of objects to be expanded for presenting.

In some embodiments, the first historical live streaming video segment is extracted from historical live streaming content of a live stream interface, and the first historical live streaming video segment comprises explanation content related to the first object in the historical live streaming content.

The units and/or modules comprised in the apparatus 400 may be implemented in various manners, including software, hardware, firmware, or any combination thereof. In some embodiments, one or more units and/or modules may be implemented using software and/or firmware, such as machine-executable instructions stored on a storage medium. In addition to or as an alternative to machine-executable instructions, some or all of the units and/or modules in the apparatus 400 may be implemented, at least in part, by one or more hardware logic components. By way of example and not limitation, example types of hardware logic components that may be used comprise field-programmable gate arrays (FPGA), application-specific integrated circuits (ASICs), application-specific standards (ASSP), system on chip (SOC), complex programmable logic devices (CPLD), and the like.

It should be understood that one or more of the above methods may be performed by a suitable electronic device or a combination of electronic devices. Such electronic device or the combination of electronic devices may comprise, for example, the terminal device 110 and the server 130 in FIG. 1.

FIG. 5 illustrates a block diagram of an electronic device 500 capable of implementing one or more embodiments of the present disclosure. It should be understood that the electronic device 500 illustrated in FIG. 5 is merely illustrative and should not constitute any limitation on the function and scope of the embodiments described herein. The electronic device 500 shown in FIG. 5 may be used to implement the terminal device 110 and/or the server 130 in FIG. 1.

As shown in FIG. 5, the electronic device 500 is in the form of a general-purpose electronic device. Components of the electronic device 500 may comprise, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In multiprocessor systems, multiple processing units execute computer-executable instructions in parallel to improve parallel processing capabilities of electronic device 500.

The electronic device 500 typically comprises a plurality of computer storage media. Such media may be any available media accessible to the electronic device 500, comprising, but not limited to, volatile and non-volatile media, removable and non-removable media. The memory 520 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 530 may be a removable or non-removable medium and may comprise a machine-readable medium, such as a flash drive, a magnetic disk, or any other medium, which may be capable of storing information and/or data and may be accessed within the electronic device 500.

The electronic device 500 may further comprise an additional removable/non-removable, volatile/non-volatile storage medium. Although not shown in FIG. 5, a disk drive for reading or writing from a removable, nonvolatile magnetic disk (e.g., a "floppy disk") and an optical disk drive for reading from or writing to a removable, nonvolatile optical disk may be provided. In these cases, each drive may be connected to a bus (not shown) by one or more data medium interfaces. The memory 520 may comprise a computer program product 525 having one or more program modules configured to perform various methods or actions of various embodiments of the present disclosure.

The communication unit 540 enables to communicate with another electronic device through a communication medium. Additionally, the function of components of the electronic device 500 may be implemented in a single computing cluster or multiple computing machines which are capable of communication over a communication connection. Thus, the electronic device 500 may operate in a networked environment using logical connections with one or more other servers, network personal computers (PCs), or another network node.

The input device 550 may be one or more input devices, for example, a mouse, a keyboard, a trackball, or the like. The output device 560 may be one or more output devices, for example, a display, a speaker, a printer, or the like. The electronic device 500 may also communicate with one or more external devices (not shown) through the communication unit 540 as needed, external devices such as storage devices, display devices, etc., communicate with one or more devices that enable a user to interact with the electronic device 500, or communicate with any device (e.g., a network card, a modem, etc. ) that enables the electronic device 500 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and comprising computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions comprises an article of manufacture comprising instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process, such that the instructions executed on the computer, other programmable data processing apparatus, or other apparatus implement the functions/acts specified in the flowchart and/or block diagram block or blocks.

The flowchart and block diagrams in the drawings show the architecture, function, and operation of possible implementations of systems, methods, and computer program products according to various implementations of the present disclosure. In this regard, each block in the flowchart or block diagram may represent a module, program segment, or a part of instructions, which comprises one or more executable instructions for implementing the specified logical function. In some alternative implementations, the functions noted in the blocks may also occur in a different order than noted in the drawings. For example, two consecutive blocks may actually be performed substantially in parallel, which may sometimes be performed in the reverse order, depending on the function involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. An interaction method comprising:
presenting a first historical live streaming video segment corresponding to a first object in response to a first live streaming playback viewing request for the first object, wherein a presentation area of the first historical live streaming video segment comprises object attribute information of a plurality of objects, and the plurality of objects comprise the first object and at least one first candidate object corresponding to the first object; and
presenting a target page corresponding to object attribute information of a target object in response to a trigger operation on the object attribute information of the target object, wherein the target object is the first object or any first candidate object of the plurality of objects.

2. The method of claim 1, wherein the at least one first candidate object satisfies at least one of the following conditions:
belonging to a same object type as the first object,
with a degree of association with the first object satisfying a predetermined association threshold, or
belonging to a same managed object set as the first object, and
wherein the at least one first candidate object further satisfies at least one of the following conditions:
corresponding to a second historical live streaming video segment, and/or
a content quality of the second historical live streaming video segment satisfying a predetermined quality threshold.

3. The method of any of claims 1 to 2, wherein a presentation area of the first historical live streaming video segment further comprises at least one of the following:
a details page entry for each of the plurality of objects, or
an interaction operation control for each of the plurality of objects.

4. The method of any of claims 1 to 3, wherein a presentation area of the first historical live streaming video segment comprises a plurality of card components respectively corresponding to the plurality of objects, the plurality of card components respectively presenting object attribute information of the plurality of objects; and/or
wherein in the presentation area of the first historical live streaming video segment, the object attribute information or a card component of the first object is presented in a more prominent position than the object attribute information or the card component of the at least one first candidate object; and/or
wherein the at least one first candidate object comprises a plurality of candidate objects, and the object attribute information or the card components of the plurality of candidate objects are ranked based on indicator values of respective predetermined indicators of the plurality of candidate objects.

5. The method of claim 4, further comprising:
switching at least one card component of the plurality of card components to at least one further card component in the presentation area of the first historical live streaming video segment in response to detecting a swiping operation on the plurality of card components in a first direction.

6. The method of any of claims 1 to 5, further comprising:
presenting the first historical live streaming video segment corresponding to the first object in response to a second live streaming playback viewing request for the first object, wherein a presentation area of the first historical live streaming video segment comprises object attribute information of a plurality of objects, and the plurality of objects comprise the first object and at least one second candidate object corresponding to the first object.

7. The method of any of claims 1 to 6, wherein a presentation area of the first historical live streaming video segment comprises a collapse control for the object attribute information of the plurality of objects, the method further comprising:
collapsing a presentation of the object attribute information of the plurality of objects and presenting an expand control for the object attribute information of the plurality of objects in response to detecting a trigger operation on the collapse control, wherein the expand control is configured to cause the object attribute information of the plurality of objects to be expanded for presenting.

8. The method of any of claims 1 to 7, wherein the first historical live streaming video segment is extracted from historical live streaming content of a live stream interface, and the first historical live streaming video segment comprises explanation content related to the first object in the historical live streaming content.

9. An apparatus for interaction comprising:
a historical segment presentation module configured to present a first historical live streaming video segment corresponding to a first object in response to a first live streaming playback viewing request for the first object, wherein a presentation area of the first historical live streaming video segment comprises object attribute information of a plurality of objects, and the plurality of objects comprise the first object and at least one first candidate object corresponding to the first object; and
a target page presentation module configured to present a target page corresponding to the object attribute information of the target object in response to a trigger operation on the object attribute information of the target object, wherein the target object is the first object or any first candidate object of the plurality of objects.

10. An electronic device comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 8.

11. A computer-readable storage medium having stored thereon a computer program executable by a processor to implement the method of any of claims 1 to 8.

12. A computer program product comprising computer executable instructions, wherein the computer executable instructions, when executed by a processor, implement the method of any of claims 1 to 8.
